(19) Europäisches Patentamt
European Patent Office
Office européen des brevets

(11) **EP 4 492 295 A1**

(12) **EUROPEAN PATENT APPLICATION**

(43) Date of publication:
**15.01.2025 Bulletin 2025/03**

(51) International Patent Classification (IPC):
**G06N 10/20** (2022.01) **G06N 20/00** (2019.01)
**G06N 3/126** (2023.01)

(21) Application number: **23184706.2**

(22) Date of filing: **11.07.2023**

(52) Cooperative Patent Classification (CPC):
**G06N 10/20; G06N 3/126; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft 80333 München (DE)**

(72) Inventors:
• **Giovagnoli, Alessandro 80337 München (DE)**
• **Ma, Yunpu 81379 München (DE)**
• **Tresp, Volker 81369 München (DE)**

(74) Representative: **Siemens Patent Attorneys Postfach 22 16 34 80506 München (DE)**

(54) **AUTOMATICAL IMPROVEMENT OF AN ARCHITECTURE OF A SYSTEM FOR MACHINE LEARNING**

(57) The present invention relates to a quantum circuit device and a method of automatically improving an architecture of a quantum circuit device for machine learning, including
- step A: creating a population of variational quantum circuits each having one or more quantum gates (R, C),
- step B: selecting a best quantum circuit of the variational quantum circuits having the best performance within at least a part of the population in regard to a pregiven task,
- step C: automatically mutating one of the variational quantum circuits and
- step D: returning to step B, until a pregiven termination criterion is reached.

FIG 7

EP 4 492 295 A1

**Description**

The present invention relates to a method of automatically improving an architecture of a system for machine learning.

The field of quantum computing has, in the last decades, attracted much attention due to the promise of enabling us to solve problems that would classically be not feasible. These problems range from quantum metrology, mathematics, chemistry to optimization in general.

At this stage, the theoretical methods of quantum information theory are limited by the current state of the art in quantum hardware production. In the current noisy intermediate-scale quantum (NISQ) era, quantum computers contain qubits ranging from 50 to 100, which are not fault-tolerant. They are still affected by decoherence and are not able to continuously implement quantum error correction, features needed to achieve the so-called quantum supremacy.

In the current NISQ era emerged the field of quantum machine learning (QML), which exploits and mixes classical and quantum techniques to solve classical or pure quantum machine learning problems. Some algorithms and techniques have already proved to give a quantum speedup over their classical counterparts once the hardware allows managing a higher number of qubits with higher stability. Other methods are instead being still explored.

A promising class of algorithms is the variational quantum algorithms that use variational quantum circuits (VQCs) as the building block. In these parametrized quantum circuits, the physical gates, usually rotations and controlled-nots, depend on adjustable parameters that can be adapted to make the circuit perform better on various tasks.

Nonetheless, they present issues that may limit their usage. One major problem is the classical barren plateau phenomenon or the fact that the depth of the circuit increases the noise, leading to the loss of entanglement or coherence between qubits. A key factor in the study of the VQCs is thus choosing an appropriate architecture, or "ansatz", that can adequately approximate the function of interest.

Anand, A., Degroote, M., & Aspuru-Guzik, A. (2021). Natural evolutionary strategies for variational quantum computation. Machine Learning: Science and Technology, 2(4), 045012 discloses a gradient-free technique evolving variational quantum circuits, starting from a fixed "ansatz" and only focusing on optimizing the weights. The chosen fixed initial architecture can be problem inspired, meaning that the way the gates are placed in the circuit depends on the given problem, which is optimal for its solution. Some examples are "ansatze" derived from the field of quantum" chemistry or combinatorial optimization, as the famous quantum approximate optimization algorithm (QAOA). In alternative, they could be problem agnostic, meaning that the architecture is independent of the problem as the hardware efficient ansatz, often used because of its ease in physical hardware implementation.

Other techniques instead attempt to find the optimal architecture for the task of interest, which means heuristically trying to place new gates to make the circuit perform better according to some carefully designed metrics. Inspired by the field of quantum chemistry and designed to gradually evolve a variational quantum eigensolver are the ADAPT-VQE algorithm (Grimsley, H. R., Economou, S. E., Barnes, E., & Mayhall, N. J. (2019). An adaptive variational algorithm for exact molecular simulations on a quantum computer. Nature communications, 10(1), 3007.), one of the first algorithms of this type to be proposed, or EVQE (Rattew, A. G., Hu, S., Pistoia, M., Chen, R., & Wood, S. (2019). A domain-agnostic, noise-resistant, hardware-efficient evolutionary variational quantum eigensolver. arXiv preprint arXiv:1910.09694.) where new gates are added smoothly, and an informed removal of redundant gates is performed.

Various algorithms have been proposed to try to optimise the architecture of a quantum circuit in order to match a target matrix. The techniques here proposed are not easily generalisable though to the task of optimising VQCs also because they make use of non-parametrised gates.

A neuroevolution of augmenting topologies (NEAT) is proposed in 2002 by Stanley and Miikkulainen (Stanley, K. O., & Miikkulainen, R. (2002). Evolving neural networks through augmenting topologies. Evolutionary computation, 10(2), 99-127) which is categorized as a sexual or genetic algorithm since it employs the crossover technique.

The object of the present invention is to provide a method and a system for optimizing quantum machine learning.

According to the present invention, this object is solved by a method and a system according to the independent claims. Further favourable developments are defined in the sub claims.

Accordingly, there is provided a method of automatically improving an architecture of a quantum circuit device for (reinforced) machine learning, including

- step A: creating a population of variational quantum circuits each having one or more quantum gates,
- step B: selecting a best quantum circuit of the variational quantum circuits having the best performance within at least a part of the population in regard to a pregiven task,
- step C: automatically mutating (at least) one of the variational quantum circuits and
- step D: returning to step B, until a pregiven termination criterion is reached.

The method can be applied to all variational quantum "Ansätze" for solving various maschine learning problems, including reinforcement learning. I.e. the method can be used in all quantum machine learning algorithms, e.g.

combinatorial optimization MaxCut, or classification, etc.

The machine learning starts with an initial architecture which is variable. The variation is performed automatically. The target of the variation is to improve the performance of the machine learning. The architecture relates to a quantum circuit device for performing quantum computing.

In step A a population of variational quantum circuits is created. At an initial state the population may be created manually. However, in an advanced state the variational quantum circuits are created automatically, e. g. by crossover and/or mutation.

In step B a best quantum circuit of the variational quantum circuits is selected. The selection may be performed in the whole population or within one or more parts of the population, e. g. within species. The selection criterium is the performance in regard to a pregiven task. I. e. the one variational quantum circuit is selected which performs the pregiven task best.

In step C at least one of the variational quantum circuits is mutated automatically. For instance, one or more of the quantum gates of the quantum circuit to be mutated is varied. The variation may include a replacement of one or more quantum gates, or an addition of one or more quantum gates.

In step D a loop instruction is defined. The method repeats steps B and C until a pregiven termination criterion is reached. The termination criterion may be the reaching of a specific number of agents (i.e. variational quantum circuits) of the population. Further termination criterions may relate to the number of generations, the number of species, the number of necessary spawns and the like. Furthermore, the termination criterion may also relate to a specific level of performance.

The method thus has the effect that the best quantum circuit is selected again and again while the population is mutated. The mutations may lead to even better performances.

The present (genetic) algorithm may be based on the classical neuroevolution of augmenting topologies (NEAT). As it will be shown, here the architecture of the circuit as well as the weights may be optimized at the same time, and through the speciation diversity can be preserved, meaning that different areas of the search space may be explored. In other words, an adaptation of the NEAT algorithm to the quantum case is proposed, having a generic multi-purpose and NISQ-friendly algorithm for solving a variety of tasks in the field of quantum machine learning: from the tasks closely inspired by quantum problems to the classical machine learning tasks.

The proposed framework may consist in a variable architecture algorithm that lets the circuit evolve finding the most suitable architecture and weights rather than starting from a fixed architecture and only updating its weights. No gradient is involved in the process of evolution, and these techniques are thus called gradient-free methods.

In a specific embodiment each quantum gate or at least one of the quantum gates is a rotation gate (ROTs) or a controlled-not gate (CNOTs). Thus, each variational quantum circuit may be made of ROTs and CNOTs. Other gates may be excluded or not.

According to a further embodiment step A includes a crossover of the best quantum circuit as one member with another member of the population in order to generate a child as new member of the population and candidate for mutation in step C. Thus, there may be provided an evolutional algorithm including crossover technique. The best agent (variational quantum circuit) is crossed with e.g. the second best. However, the crossover can also take place between the best quantum circuit and the third best, fourth best etc. This evolutional approach has the advantage that the performance of the population increases.

According to a further development a unique identification information, which may be called gene, is assigned to each gate within each variational quantum circuit, each of which includes a number of uniquely identified gates, and the identification information is used for the crossover. Each gene may represent a tuple containing information about the type, layer and wire of the gate. All genes together may form the genome of the respective variational quantum circuit. When using the genes (i.e. the identification information) for the crossover of two agents the parameters of the genes can be used for identifying gates to be exchanged or the like.

In a further embodiment each identification information includes a couple of type data for identifying a type of the respective gate, layer data for identifying a layer of the respective gate of the respective variational quantum circuit, and wire data for identifying a wire the respective gate is connected to. Thus, each gate is uniquely identifiable by its type, layer and wire. For simplicity a wire is often called "qubit" of a quantum circuit.

In still another embodiment each identification information further includes innovation data representing a time stamp for generating the respective gate. Crossover and/or mutation results in a new generation. Each generation may be numbered by an innovation number which may represent the innovation data. The innovation data can be regarded as unique time stamp which can not occur again. Thus, the innovation data is also a unique information about the variational quantum circuit as agent of the population.

It may be envisaged that a first identification information is assigned to the one member of the crossover and a second identification information is assigned to the other member of the crossover, and, if the first identification information matches the second identification information, anyone of both information is inherited to the child, and, if the first identification information does not match the second identification information, the first identification information is inherited to the child of the crossover. This means that two variational quantum circuits (agents) take part in the crossover as the one member and the other member. This means e.g. that a first gene (first identification information) of one agent (one member) of the crossover and a second gene (second identification information) of the other agent (other member) of the crossover are compared for the crossover. If both genes match, they are inherited to the child randomly. However, if both genes do not match (disjoint genes) the first gene of the one member, i.e. the best quantum circuit (fittest parent) is inherited. If both parents have the same fitness, disjoint genes may also be chosen randomly.

In a further embodiment the mutation of step C takes place according to a pregiven prescription. Alternatively, the mutation may take place randomly. In the mutation process the genes of the dates are modified, which means that the gates themselves are modified. Specifically, a feature of the gene may be modified. E.g. the feature to be modified may be the rate of rotation (angle of rotation) of a ROT gate. A mutation may also be that a new gate (ROT or CNOT) is added to the variational quantum circuit. If necessary, certain rules must be observed for the mutation process.

In a further embodiment it is envisaged that a child of the crossover is mutated. Preferably, the mutation process only takes place in a new generation. For example, mutation only takes place for a child of crossing parents. Thus, the evolutional process is more stable.

According to a further embodiment the population is divided into at least two species, and the crossover takes place only within the species. This means that the population is divided into two or more parts (species). Only parents of one species are allowed to crossover. The speciation guarantees that diversity is maintained longer.

According to another embodiment the new member of the crossover is assigned to one of the species according to a pregiven provision. The provision may be based on a distance to the best variational quantum circuit of a species. If, for instance a new child has a smaller distance to the best of a first species than to the best of a second species, the new child is assigned to the first species. The distance may be calculated on the basis of the difference of numbers of genes, the number of disjoint genes and/or the distance between rotation angles of matching genes.

In a further embodiment the population has a first species and a second species, members of the first species have a better performance in average than members of the second species, and as a consequence, the number of members of the first species is increased with respect to the number of members of the second species. The increase may be performed relatively or absolutely. This means that the number of members of the first species is also relatively increased by decreasing the number of members of the second species. If applicable both a number of members of the first species is increased and the number of members of the second species is decreased. Thus, the species with the lower performance is penalized.

The above object is also solved by a quantum circuit device designed for automated (e.g. reinforced) learning, including

- processing means designed for creating a population of variational quantum circuits each having one or more quantum gates,
- selection means designed for selecting a best quantum circuit of the variational quantum circuits having the best performance within at least a part of the population in regard to a pregiven task,
- mutation means designed for automatically mutating (at least) one of the variational quantum circuits and
- controlling means designed for controlling the selection means and the mutation means to repeat the selection and mutation alternately until a pregiven termination criterion is reached.

The quantum circuit device may be realized as quantum computer or any other hardware structure. The processing means, the selection means, the mutation means and the controlling means may all include one or more processors. Alternatively one or more of them are realized with one single processor. The means may also include software for selecting, mutating and/or controlling.

There may be provided a computer program or computer program product comprising instructions which, when the program is executed by a computer, cause the computer to carry out the method as described above. Furthermore, there may be provided a computer-readable storage medium comprising instructions which, when executed by a computer, cause the computer to carry out the above method.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

The present invention will now be described in more detail along with the figures showing in:

FIG 1      a quantum circuit with strongly entangling layers architecture;

FIG 2      an example of a quantum constraint variational quantum circuit;

FIG 3-7    a crossover process for two simple VQCs (FIG 3 and 4) with gene alignments in FIG 5 and 6 as well as a child VQCs in FIG 7;

FIG 8    an example of a QNEAT algorithm.

The following examples represent preferred embodiments of the present invention.

The algorithm here presented consists of an adapted version of the Neuroevolution for Augmented Topologies for the case of quantum variational architectures. We will first consider the case of a free or a pre-defined structure in the architecture and then explain how the genome, crossover, mutation, and speciation process have been adapted.

Architecture

To adapt the architecture to the quantum case, we first distinguish between a constrained and a free architecture. We define a variational quantum circuit with a free architecture as a VQC where there is no constraint on the placements of rotation gates (ROTs) and controlled-not gates (CNOTs). In other words, ROTs gates are allowed to concatenate one after the other, and CNOTs can connect any two wires. In such a case, no regularity is encountered, and thus no concept of a layer is defined.

A VQC with a constrained architecture is instead a circuit where, after the initial encoding layer, the ROTs and CNOTs follow a regular pattern. There are many architectures, namely architecture Ansatze, that can be used. Some common examples are the hardware efficient architecture or the strongly entangling architecture. We will take the last one as a reference and describe it in more detail since it is often used in literature.

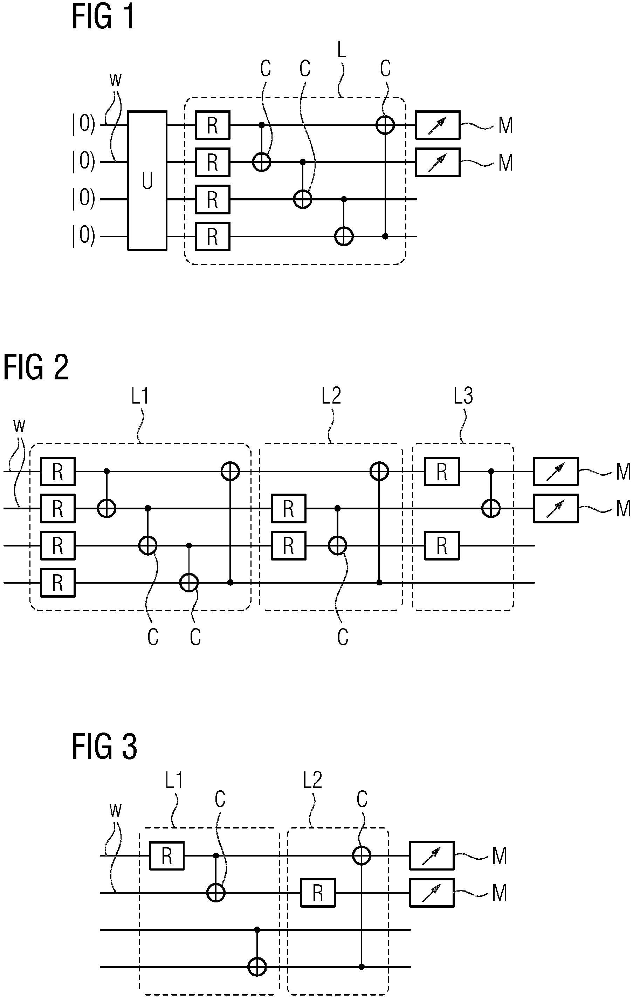

As shown in FIG 1, after the usual encoding layer U, the architecture consists of repeating layers of first a set of ROTs, one for each wire w, and then a sequence of CNOTs C, where each one of them goes from wire $i$ to wire $i$+1, mod($n$), with $n$ the number of wires w. The gates grouped into the dotted lines constitute one layer L, which can be repeated for an arbitrary amount of time. The algorithm will determine how deep the circuit will be and, thus, how many layers L it will be made of. Measurement units measure the output values (0 or 1) of the wires w.

To give e deeper insight into the resulting architecture once the algorithm made it evolve and added gates respecting the constraints, we look at one example in FIG 2, where the encoding part U has been left out for simplicity. The dotted lines identify the layers L1, L2, L3 previously discussed. According to the constraints, these layers are not entirely filled but only partially. Layer L1 is completely filled; layer L2 only has two ROTs R and two CNOTs C, while layer L3 is filled with two ROTs R and one CNOT C. In any case, we can see that the constraints are respected inside each layer: no more than one ROT for each wire is placed, and the CNOTs always connect wires $i$ and $i$+1,mod($n$). Inside each layer, we can thus identify a sublayer of ROTs and a sublayer of CNOTs.

Clearly, the set of all possible architectures compatible with the constraints we posed is a subset of the ones that a free search could find. Nonetheless, the task would be computationally much more expensive. For example, only the number of CNOTs that could be placed in a layer grows with the number $n$ of wires as $\dfrac{n!}{2(n-2)!}$, while it grows linearly with $n$ in the constrained case. Also, no better performance on a practical level is guaranteed. For these reasons, from now on, we will only consider the case of a constrained architecture and leave the free case as a possible future research.

Genome

Each agent, i.e. VQC, of the population may be endowed with genetic information (identification information) that encodes which gates are present at a given moment of the evolution and where they are placed. Through the genes of the agent, its architecture can be reconstructed.

If we consider a VQC with $n$ layers and m wires, then each gate is uniquely identified by a tuple ($t,l,w$) containing information about e.g. the type, layer, and wire of the gate. More specifically

$$t \in \{\mathrm{ROT}, \mathrm{CNOT}\},\ l \in \{1, ..., n\}, and\ w \in \{1, ..., m\}.$$

This information is enough to identify any gate because in the constrained architecture, once a layer L or layer number $l$ is specified, we also know to which sublayer the gate belongs, meaning that all the ROTs must be placed before the CNOTs. Parameter $w$ indicates which wire it belongs to, and if we are dealing with a ROT gate, then it can already be placed without any other ambiguity. Otherwise, if it is a CNOT gate, we know that it will go from $w \to w$+1,mod($m$), which also determines uniquely where to place it.

The genes also contain innovation numbers, which, analogously to the classical NEAT algorithm, keep track of the chronological time step in which the mutation happened and are later used to compare mutations that occurred at the same time for the crossover. Each innovation number uniquely identifies a tuple ($l,w$). Since the architecture is constrained, ROTs and CNOTs are always placed in their respective sublayers, which means that a mutation producing a CNOT could not have produced a ROT in the same place. Thus the innovation numbers of CNOTs and ROTs should be compared separately. On this basis, we divide the genome lists depending on the type of gate. Every ROT gate also contains information about the rotation angles. As an explicit example we show the genome of the architecture in FIG 2 in Table 1 and 2.

Table 1: Genome of CNOTs for architecture in FIG 2. The rotation angles ($\theta_x, \theta_y, \theta_z$) are encoded in a vector $\vec{\theta}_{l,w}$ where $l,w$ stand for the layer and wire.

| Layer | 1 | 1 | 1 | 1 | 2 | 2 | 3 | 3 |
|---|---|---|---|---|---|---|---|---|
| Wire | 1 | 2 | 3 | 4 | 2 | 3 | 1 | 3 |
| Angles | $\vec{\theta}_{11}$ | $\vec{\theta}_{12}$ | $\vec{\theta}_{13}$ | $\vec{\theta}_{14}$ | $\vec{\theta}_{22}$ | $\vec{\theta}_{23}$ | $\vec{\theta}_{31}$ | $\vec{\theta}_{33}$ |
| Innov. n. | 1 | 2 | 3 | 4 | 6 | 7 | 9 | 10 |

Table 2: Genome of ROTs for architecture in FIG 2. The genome of each CNOT contains the information of the wire on which the control depends on, here called *Wire (from)*. The information about the wire it is acting on (*Wire to*) is redundant because of the constrains on the architecture. Here it is shown anyway for completeness.

| Layer | 1 | 1 | 1 | 1 | 2 | 2 | 3 |
|---|---|---|---|---|---|---|---|
| Wire (from) | 1 | 2 | 3 | 4 | 2 | 4 | 1 |
| (Wire to) | 2 | 3 | 4 | 1 | 3 | 1 | 2 |
| Innov. n. | 1 | 2 | 3 | 4 | 6 | 8 | 9 |

Crossover

Crossover is the optional process through which the genome of two members (herein also called agents, VQCs or parents) of the population gets mixed during the reproduction of the fittest members to produce the offspring's genome. Given two genomes, we define matching genes the ones that e.g., given a type $t \in$ {ROT,CNOT} have the same tuple ($l,w$). In the case of ROTs, this means that two rotation gates, even though they may have different angles, are considered matching genes if placed at the same point of the circuit's architecture. In the case of CNOTs, instead, the above definition corresponds to saying that two CNOTs are matching if they connect identical qubits/wires. We then define disjoint genes as those that differ for one of the values in the tuple ($l,w$).

When two members reproduce, we want the fittest member's genome to be the basis for the future offspring, with some modifications deriving from the less fit one. The crossover method works by aligning the genomes with respect to the innovation numbers so that the chronology of mutations allows us to compare and see which are the matching or disjoint genes. Then we select the genes for the offspring with the following rules:

1. Matching genes are inherited randomly.
2. Disjoint genes are inherited from the fittest parent. If the two parents have the same fitness, disjoint genes will also be chosen randomly.

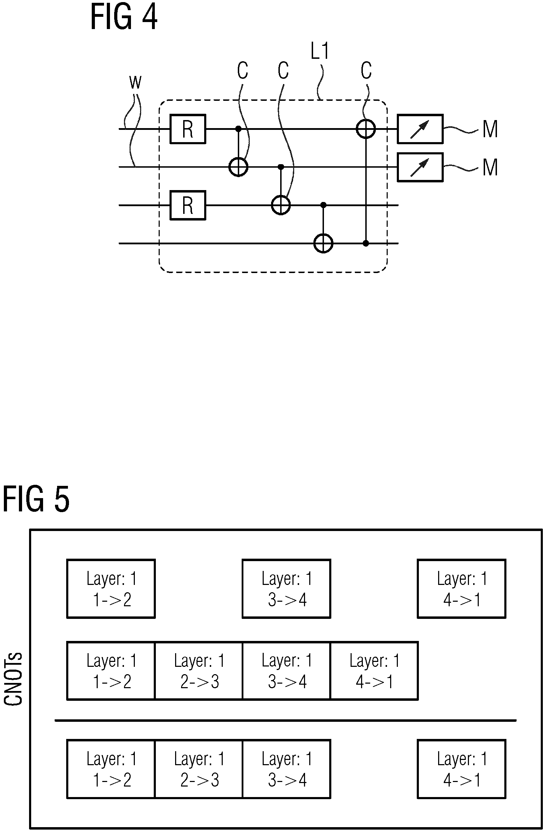

The crossover process is performed separately for CNOTs and ROTs since so are the genome lists. In FIG 3 to 7, we give an explicit example of crossover for two simple architectures shown in FIG 3 and FIG 4. We assume that two architectures have the same fitness, and we highlight the layers L1 and L2 with the dotted boxes. The encoding layer U has been omitted.

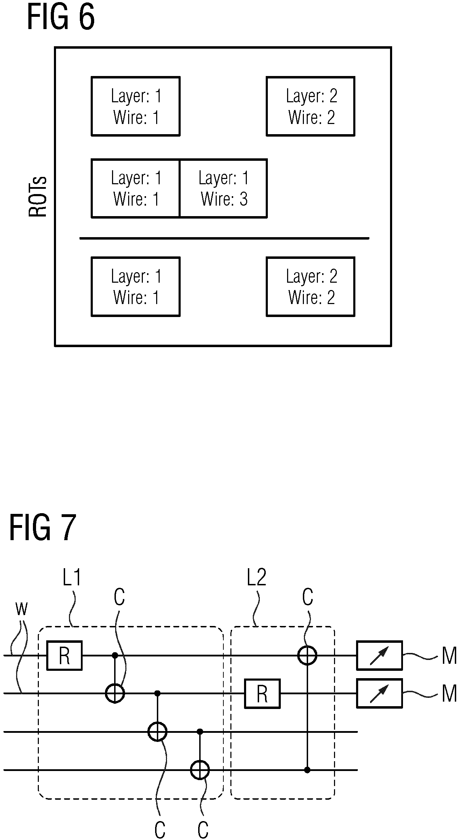

The crossover process should take place separetly for CNOTs and ROTs as shown in FIG 5 and FIG 6. In each box the genes are aligned with respect to the innovation number. The first line lists the genome of the left VQC of FIG 3; the second line the genome of the right VQC of FIG 4; the third line the genome of the offspring, where the gates have been selected according to the rules explained. Here the two VQC are supposed to have the same fitness, thus the choice of matching or disjoint genes is made randomly. The resulting VQC corresponding to the genome of the third line of FIGs 5 and 6 is shown in FIG 7.

Mutation

After the optional crossover has been performed or without crossover, a mutation can take place. In the mutation process, there are e.g. two possible features that we can modify: The weights of the rotations can be adjusted (adding, for example, a small value sampled from a normal distribution); A new gate (ROT or CNOT) can be added respecting the rules of the constrained architecture. All the recent changes are then encoded into the genome.

Speciation

Furthermore, just like in the original idea of the NEAT algorithm, species are introduced to diversify the different evolutions and preserve the diversity for some time. This is because a new architecture may perform well only once the weights have been appropriately adapted, which may take some evolution steps.

We thus divide the population into species, and, in order to understand if a generic agent is a member of a given species, we use the following metric to compare the agent with the best-performing member of the species.

$$\delta = c_1 \frac{E}{N} + c_2 \frac{D}{N} + c_3 \overline{W}, \qquad (1)$$

where $c_1, c_2, c_3$ are linear coefficients that can be chosen arbitrarily, $E$ is the number of genes in excess, so the ones whose invention number is not reached by the other agent, $D$ is the number of disjoint genes, as defined before. $\overline{W}$ is the average distance between the rotation angles of matching genes. $N$ is the number of genes of the architecture containing the longest genome.

The reproduction process is thus performed inside a single species. If a species is performing poorly, we want to penalize it by reducing its members, and the opposite if, on average, it is producing fit members. To do so, we consider species $j$ containing in a given moment $N_j$ members. The number of members of that species after the reproduction process will be

$$N'_j = \sum_{i=0}^{N_j} \frac{f_{ij}}{\bar{f}}, \qquad (2)$$

where $\bar{f}$ is the average fitness of the whole population.

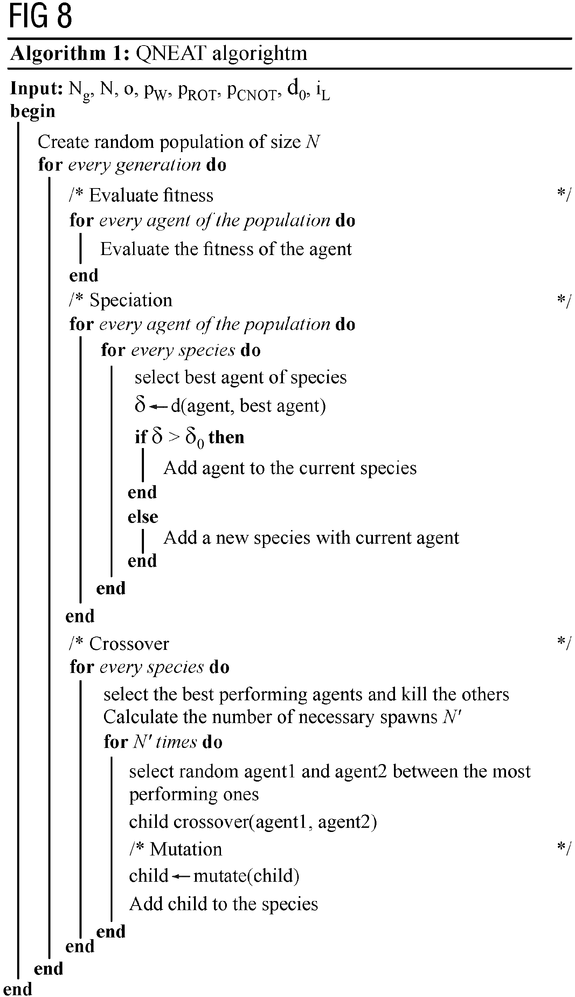

FIG 8 shows an example of a complete algorithm of QNEAT. The primary hyperparameters of the algorithm are the followings: the number of generations we want to run it for $N_g$, the population size $N$, the weights mutation coefficient, e.g., the standard deviation of the normal distribution $\mathcal{N}(0, \sigma)$ from which we will sample to change the rotation weights. Moreover, we define the probability that the weights of a gate will be changed as $p_w$, that a ROT gate will be added as $p_{ROT}$, and that a CNOT gate will be added as $p_{CNOT}$, the compatibility threshold $\delta_0$ to determine if a member is or is not part of a species.

One last crucial hyperparameter given in input is the number of initial total layers $i_L$. While we could start from an empty circuit and let QNEAT evolve it, as we will do in the experiments, another option is to start from a circuit with an initial number of layers filled in the sense of Figure 1. Initial layers may lead to a faster convergence from observation of experimental results, even though it is not guaranteed.

In summary a multi-purpose and NISQ-friendly algorithm may be provided. VQCs, which usually are trained starting from a fixed architecture, thanks to QNEAT can instead be left free to evolve. One important consequence of this is that the resulting quantum circuits end up in having less gates than circuits that started from a fixed architecture, obtaining anyway better or equal performances.

To prove with some benchmarks the effectiveness of the algorithm we test it on some of the usual machine learning tasks, namely reinforcement learning and optimization tasks.

Reinforcement Learning

Different techniques of quantum reinforcement learning have been employed, each one with a different degree of quantum-classical hybridization. As a reference we take the case of deep reinforcement learning, where the well known Q-value method is solved with a function approximator: a classical neural network is used to learn the $Q$ function, so the expected future total reward, by an update rule that comes from the Bellman equation. This leads the function $Q$ to its desired value:

$$Q(s,a) = \mathbb{E}\left[r + \gamma \max_{a \in \mathcal{A}} Q(s',a)\right] \qquad (3)$$

where

$$a \in \mathcal{A}$$

is an action in the action space,

$$s, s' \in \mathcal{S}$$

are the current and next observation (states) in the observation space, $r$ the reward of the action taken and $\gamma$ the discount factor.

Different attempts have been made to reproduce the same algorithm using a VQC as a function approximator for the $Q$ function. Starting from this framework, we also want the QNEAT algorithm to learn the $Q$ value function. Since no gradient-update is employed here, in no point of the algorithm the constraint of the Bellman equation is applied, and thus the policy found may not respect it. We can conclude thus that in this context the QNEAT algorithm behaves like an informed random search for a good (supposedly optimal) policy.

The algorithm may be tested on the Cart Pole and Frozen Lake benchmarks. In the first case we encode the observation space information in the qubits by a simple angle rotation with respect to the $x$ axis: for the $i$-th observation, whose value we call $\theta$, a rotation $R_x(\theta)$ is applied to the gate $i$. We measure as many qubits as the dimension of the action space. In the Cart Pole problem the dimensions of the observation and action space are, respectively, four and two.

In the Frozen Lake benchmark we have an 8x8 grid for a total of 64 squares. We identify each square with a number from 1 to 64 and convert the number into a bit string of length 6 = $\log_2(64)$. We thus use 6 qubits to encode the information applying to the $i$-th qubit a rotation of angle

$$\theta_i = \pi x_i, \quad \text{with} \, x_i \in \{0,1\}. \qquad (4)$$

Optimization

As an example of optimization, we consider combinatorial optimization problems. In particular, we study the MaxCut problem, which is particularly important since many quadratic unconstrained binary optimization problems can be mapped into the MaxCut problem. Being able to solve it means thus the ability to solve a broader class of combinatorial optimization problems.

One traditional approach to solving combinatorial optimization problems is the Quantum Approximate Optimization Algorithm (QAOA). The QAOA can be seen as a particular case of Variational Quantum Eigensolvers (VQEs), a class of VQCs used to approximate the Schrödinger equation to evolve an initial state into a final one under an evolving Hamiltonian. More specifically, given an initial Hamiltonian $H_i$ with a known ground state $\psi_{i,0}$, and a final Hamiltonian $H_f$ encoding our optimization problem with ground state $\psi_{f,0}$ encoding the optimal solution, then we can start from the state $\psi_{i,0}$ and make it evolve with an appropriate unitary operation into the final one

$$\psi_{f,0} = U\psi_{i,0}, \qquad (5)$$

where the action of the unitary operator $U$ is performed by the VQC. We can thus map this problem into a VQC by encoding the initial ground state $\psi_{i,0}$ into the qubits and find an appropriate architecture to simulate a unitary time evolution $U$ to the final state encoding the optimal solution.

To give a concrete example, one possible choice of $U$ is the one given by the Schrödinger equation. Namely, we can choose an evolving Hamiltonian $H(t) = tH_f + (1 - t)H_i$, with $H_f$ the one encoding our problem. Then we can exponentiate it to obtain the Schrödinger equation

$$\psi_{f,0} = \exp\frac{-iH(t)t}{\hbar}\psi_{i,0}, \qquad (6)$$

where the exponential can be decomposed analytically into physical gates, and a precise architecture can be found. This is only one possible choice of architecture. Here we use the QNEAT algorithm to evolve the circuit and evolutionarily find the optimal architecture.

In this class of problems, we aim to find the state that encodes the lowest energy of the problem Hamiltonian $H_f$. In other words, we want to minimize the following expectation value

$$H_f \psi_f. \qquad (7)$$

The MaxCut problem we took into account consists of dividing the nodes on a graph into two separate sets so that the imaginary line drawn to encircle one, or the other set goes through the maximum number of edges in the graph. We can label the nodes 0 or 1 depending on the set they belong to, and these values can be encoded into the qubits. With an appropriate Hamiltonian, we can encode the information of the edge between the two being cut or not.

For fitness we use the average value of the Hamiltonian of MaxCut, namely:

$$H = \sum_{(i,j) \in G} \frac{1}{2}\left(1 - Z_i \otimes Z_j\right), \qquad (8)$$

considering $Z_k$ the spin measured on the $k$-th qubit and $G$ being the set of the edges of the graph. Considering the output of the measure on the qubit to be in {-1,1}, then if two nodes $(i,j)$ belong to the same set, so they have values (1,1) or (-1,-1), then the edge contributes with a factor of 0 to the Hamiltonian, which corresponds to the fact that no cut goes through the edge. If instead they have different values, (-1,1) or (1,-1), then the edge contributes with a factor 1. We thus aim at maximizing the Hamiltonian.

At the end of the evolution process, we select the best member and sample 100 times to see the distribution on the outcome results, so how many times the circuit gives a measured bit-string corresponding to one of the optimal solutions of the MaxCut problem for the given graph.

In this document we showed how the QNEAT algorithm manages to find good solution to the Max Cut problem, but it can also be applied to more concrete use-cases. An important example for the industry is the job shop scheduling problem (JSSP), where different studies have shown how certain fixed architecture circuits can solve the problem of organizing time slots with given constraints regarding the production tasks, the delivery, and many others.

## Claims

1. Method of automatically improving an architecture of a quantum circuit device for machine learning, **characterized by**

   - step A: creating a population of variational quantum circuits each having one or more quantum gates (C, R),
   - step B: selecting a best quantum circuit of the variational quantum circuits having the best performance within at least a part of the population in regard to a pregiven task,
   - step C: automatically mutating one of the variational quantum circuits and
   - step D: returning to step B, until a pregiven termination criterion is reached.

2. Method according to claim 1, wherein each quantum gate or at least one of the quantum gates is a rotation gate (R) or a controlled-not gate (C).

3. Method according to claim 1 or 2, wherein step A includes a crossover of the best quantum circuit as one member with another member of the population in order to generate a child as new member of the population and candidate for mutation in step C.

4. Method according to claim 3, wherein a unique identification information is assigned to each gate (R, C) within each variational quantum circuit each of which includes a number of uniquely identified gates, and the identification information is used for the crossover.

5. Method according to claim 4, each identification information includes a tuple of type data for identifying a type of the respective gate (R, C), layer data for identifying a layer of the respective gate (R, C) of the respective variational quantum circuit, and wire data for identifying a wire (w) the respective gate is connected to.

6. Method according to claim 5, wherein each identification information further includes innovation data representing a time stamp for generating the respective gate (R, C).

7. Method according to one of the claims 3 to 6, wherein a first identification information is assigned to the one member of the crossover and a second identification information is assigned to the other member of the crossover, and, if the first identification information matches the second identification information, anyone of both information is inherited to the child, and, if the first identification information does not match the second identification information, the first identification information is inherited to the child of the crossover.

8. Method according to one of the preceding claims, wherein the mutation of step C takes place according to a pregiven prescription.

9. Method according to claim 3 and 8, wherein a child of a crossover is mutated.

10. Method according to one of the preceding claims, wherein a weight of rotation is changed in mutation step C.

11. Method according to one of the preceding claims, wherein a new gate (r, C) is added to the one of the variational quantum circuits in mutation step C.

12. Method according to one of the claims 3 to 11, wherein the population is divided into at least two species, and the crossover takes place only within the species.

13. Method according to claim 12, wherein the new member of the crossover is assigned to one of the species according to a pregiven provision.

14. Method according to claim 12, wherein the population has a first species and a second species, members of the first species have a better performance in average than members of the second species, and as a consequence the number of members of the fist species is increased with respect to the number of members of the second species.

15. Quantum circuit device designed for automated learning, **characterized by**

    - processing means designed for creating a population of variational quantum circuits each having one or more quantum gates (R, C),
    - selection means designed for selecting a best quantum circuit of the variational quantum circuits having the best performance within at least a part of the population in regard to a pregiven task,
    - mutation means designed for automatically mutating one of the variational quantum circuits and
    - controlling means designed for controlling the selection means and the mutation means to repeat the selection and mutation alternately until a pregiven termination criterion is reached.

FIG 1

FIG 2

FIG 3

# FIG 4

# FIG 5

## FIG 6

## FIG 7

# FIG 8

**Algorithm 1:** QNEAT algorightm

**Input:** $N_g$, $N$, $o$, $p_W$, $p_{ROT}$, $p_{CNOT}$, $d_0$, $i_L$

**begin**

    Create random population of size $N$

    **for** *every generation* **do**

        /* Evaluate fitness                                     */

        **for** *every agent of the population* **do**

            Evaluate the fitness of the agent

        **end**

        /* Speciation                                         */

        **for** *every agent of the population* **do**

            **for** *every species* **do**

                select best agent of species

                $\delta \leftarrow d(\text{agent, best agent})$

                **if** $\delta > \delta_0$ **then**

                    Add agent to the current species

                **end**

                **else**

                    Add a new species with current agent

                **end**

            **end**

        **end**

        /* Crossover                                      */

        **for** *every species* **do**

            select the best performing agents and kill the others

            Calculate the number of necessary spawns $N'$

            **for** $N'$ *times* **do**

                select random agent1 and agent2 between the most performing ones

                child crossover(agent1, agent2)

                /* Mutation                        */

                child $\leftarrow$ mutate(child)

                Add child to the species

            **end**

        **end**

    **end**

**end**

Europäisches
Patentamt

European
Patent Office

Office européen
des brevets

# EUROPEAN SEARCH REPORT

Application Number

EP 23 18 4706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANKEN LUKAS ET AL: "Quantum Circuit Evolution on NISQ Devices", 2022 IEEE CONGRESS ON EVOLUTIONARY COMPUTATION (CEC), IEEE, 18 July 2022 (2022-07-18), pages 1-8, XP034179976, DOI: 10.1109/CEC55065.2022.9870269 [retrieved on 2022-09-06] * the whole document * | 1-15 | INV. G06N10/20 G06N20/00 G06N3/126 |
| | ----- | | |

TECHNICAL FIELDS
SEARCHED (IPC)

G06N

The present search report has been drawn up for all claims

| Place of search | Date of completion of the search | Examiner |
|---|---|---|
| The Hague | 30 December 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANAND, A.** ; **DEGROOTE, M.** ; **ASPURU-GUZIK, A.** Natural evolutionary strategies for variational quantum computation. *Machine Learning: Science and Technology*, 2021, vol. 2 (4), 045012
- **GRIMSLEY, H. R.** ; **ECONOMOU, S. E.** ; **BARNES, E.** ; **MAYHALL, N. J.** An adaptive variational algorithm for exact molecular simulations on a quantum computer.. *Nature communications*, 2019, vol. 10 (1), 3007

- **RATTEW, A. G** ; **HU, S.** ; **PISTOIA, M.** ; **CHEN, R.** ; **WOOD, S.** A domain-agnostic, noise-resistant, hardware-efficient evolutionary variational quantum eigensolver. *arXiv preprint arXiv:1910.09694*, 2019
- **STANLEY, K. O.** ; **MIIKKULAINEN, R.** Evolving neural networks through augmenting topologies. *Evolutionary computation*, 2002, vol. 10 (2), 99-127